(19) **Europäisches Patentamt / European Patent Office / Office européen des brevets**

(11) **EP 4 707 421 A1**

(12) **EUROPEAN PATENT APPLICATION**
published in accordance with Art. 153(4) EPC

(43) Date of publication:
**11.03.2026 Bulletin 2026/11**

(21) Application number: **24819023.3**

(22) Date of filing: **11.04.2024**

(51) International Patent Classification (IPC):
*C22C 38/00* (2006.01)     *C21D 8/02* (2026.01)
*C21D 9/00* (2006.01)      *C22C 19/05* (2006.01)
*C22C 30/00* (2006.01)     *C22C 38/58* (2006.01)
*C22F 1/00* (2006.01)      *C22F 1/10* (2006.01)

(52) Cooperative Patent Classification (CPC):
**C21D 8/02; C21D 9/00; C22C 19/05; C22C 30/00; C22C 38/00; C22C 38/58; C22F 1/00; C22F 1/10**

(86) International application number:
**PCT/JP2024/014694**

(87) International publication number:
**WO 2024/252784 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.06.2023  JP 2023092086**

(71) Applicant: **JFE Steel Corporation**
**Tokyo, 100-0011 (JP)**

(72) Inventors:
- **SAKAI Ryosuke**
  **Tokyo 100-0011 (JP)**
- **IKEDA Hiroshi**
  **Tokyo 100-0011 (JP)**
- **ONO Tomohiro**
  **Tokyo 100-0011 (JP)**
- **KAWANAKA Tooru**
  **Tokyo 100-0011 (JP)**

(74) Representative: **Haseltine Lake Kempner LLP**
**One Portwall Square**
**Portwall Lane**
**Bristol BS1 6BH (GB)**

(54) **CLAD STEEL SHEET, METHOD FOR PRODUCING SAME, AND LINE PIPE**

(57)     Provided are a clad steel plate that has a tensile strength: 535 MPa or more, a DWTTSA-$_{30°C}$ value of 85% or more, and excellent HAZ toughness even at a plate thickness: more than 30 mm, and a method for manufacturing the clad steel plate.

A clad steel plate includes a cladding metal bonded to one surface or both surfaces of a base steel plate, in which the base steel plate has a chemical composition containing predetermined amounts of C, Si, Mn, P, S, Al, Nb, Ti, and N, further containing predetermined amounts of one or two or more selected from Cu, Ni, Cr, Mo, V, and Ca, and satisfying $0.40 \leq Ceq \leq 0.50$, the balance being Fe and unavoidable impurities, and in which the base steel plate has a steel microstructure in which at a 1/2 plate thickness position in the thickness direction of the base steel plate, the area fraction of bainite is 80% or more, and the average crystal grain size of bainite is less than 20 $\mu$m.

**EP 4 707 421 A1**

**Description**

Technical Field

The present invention relates to a clad steel plate and a method for manufacturing the clad steel plate, and in particular, to a clad steel plate suitable for line pipes and a method for manufacturing the clad steel plate. The present invention also relates to a line pipe using the clad steel plate.

Background Art

A clad steel plate is formed by laminating a base steel plate, such as carbon steel, with a cladding metal made of a corrosion-resistant alloy. Such a clad steel plate has both mechanical properties and corrosion resistance as structural members, and has the advantage of being less expensive than solid corrosion-resistant alloys.

In recent years, oil and natural gas development has expanded to areas exposed to severe corrosive environments. Accordingly, a demand for line pipes that enable the economical transportation of oil and natural gas is expected to increase. Clad steel plates, in particular, Ni-based alloy-clad steel plates and austenitic stainless steel-clad steel plates, are expected to be in demand for line pipe applications exposed to severe corrosive environments, due to their high corrosion resistance.

Clad steel plates for line pipes are required to ensure predetermined mechanical properties, in particular excellent low-temperature toughness from the viewpoint of preventing brittle fracture of pipelines, in addition to the corrosion resistance of the cladding metal.

As such a clad steel plate, for example, Patent Literature 1 discloses "a Ni-alloy-clad steel plate including a low-alloy steel as a base steel excellent in low-temperature toughness and HAZ toughness, and a Ni alloy as a cladding metal excellent in corrosion resistance, in which the base steel has a chemical composition containing, in mass%, C: 0.020% to 0.100%, Si: 0.10% to 0.50%, Mn: 0.75% to 1.80%, P: 0.015% or less, S: 0.0030% or less, Cu: 0.01% to 0.50%, Ni: 0.01% to 0.45%, Cr: 0.01% to 0.50%, Mo: 0.01% to 0.50%, Nb: 0.005% to 0.080%, Ti: 0.005% to 0.030%, N: 0.0010% to 0.0060%, Al: 0.070% or less, Ca: 0.0010% to 0.0040%, the balance being Fe and unavoidable impurities".

Patent Literature 2 discloses "a Ni-alloy-clad steel plate including a low-alloy steel as a base steel excellent in low-temperature toughness and HAZ toughness, and a Ni alloy as a cladding metal excellent in corrosion resistance, in which the base steel has a chemical composition containing, in mass%, C: 0.020% to 0.100%, Si: 0.10% to 0.50%, Mn: 0.75% to 1.80%, P: 0.015% or less, S: 0.0030% or less, Cu: 0.01% to 0.50%, Ni: 0.01% to 0.45%, Cr: 0.01% to 0.50%, Mo: 0.01% to 0.50%, Nb: 0.005% to 0.080%, Ti: 0.005% to 0.030%, N: 0.0010% to 0.0060%, Al: 0.070% or less, Ca: 0.0010% to 0.0040%, the balance being Fe and incidental impurities".

Patent Literature 3 discloses "an austenitic stainless steel-clad steel plate including a low-alloy steel as a base steel excellent in low-temperature toughness and HAZ toughness, and an austenitic stainless steel as a cladding metal excellent in corrosion resistance, in which the base steel has a chemical composition containing, in mass%, C: 0.020% to 0.100%, Si: 0.10% to 0.50%, Mn: 0.75% to 1.80%, P: 0.015% or less, S: 0.0030% or less, Cu: 0.01% to 0.50%, Ni: 0.01% to 0.45%, Cr: 0.01% to 0.50%, Mo: 0.01% to 0.50%, Nb: 0.005% to 0.080%, Ti: 0.005% to 0.030%, N: 0.0010% to 0.0060%, Al: 0.070% or less, and Ca: 0.0010% to 0.0040%, the balance being Fe and unavoidable impurities".

Patent Literature 4 discloses "a clad steel plate including a cladding metal made of a corrosion-resistant alloy bonded to one surface of the base steel plate, in which the base steel plate has a chemical composition containing, in mass%, C: 0.020% to 0.100%, Si: 0.05% to 0.50%, Mn: 0.75% to 1.80%, P: 0.015% or less, S: 0.0030% or less, Al: 0.010% to 0.070%, Nb: 0.005% to 0.080%, Ti: 0.005% to 0.030%, and N: 0.0010% to 0.0060%, the balance being Fe and unavoidable impurities, the base steel plate has a steel microstructure where, at the 1/2 plate thickness position in the thickness direction of the base steel plate, the area fraction of bainite is 94% or more, the area fraction of a martensite-austenite constituent is 6% or less, and the average crystal grain size of the bainite is 25 um or less, and the interface between the base steel plate and the cladding metal bonded together has a shear strength of 300 MPa or more".

Citation List

Patent Literature

PTL 1: Japanese Unexamined Patent Application Publication No. 2015-86422

PTL 2: Japanese Unexamined Patent Application Publication No. 2015-117408
PTL 3: Japanese Unexamined Patent Application Publication No. 2015-105399
PTL 4: International Publication No. WO 2018/181381

Summary of Invention

Technical Problem

In the techniques disclosed in Patent Literatures 1 to 3, a thermo-mechanical control process (TMCP) is used to achieve mechanical properties including a tensile strength of 535 MPa or more and DWTTSA-$_{20°C}$ ≥ 85%, together with the corrosion resistance of the cladding metal, without impairing the productivity.

Here, DWTTSA-$_{20°C}$ is percent ductile fracture obtained by a DWTT test in accordance with API-5L (test temperature: - 20°C).

In the technique described in Patent Literature 4, direct quench and tempering (DQ-T) process is used to achieve mechanical properties including a plate thickness: 30 mm or less, a tensile strength: 535 MPa or more, and DWTTSA-$_{30°C}$ ≥ 85%.

With the above techniques, however, it is currently difficult to ensure sufficient low-temperature toughness in thick-walled materials having a plate thickness of more than 30 mm. The ensuring of low-temperature toughness by TMCP and DQ-T is achieved mainly by the following: refinement of austenite by lowering product heating temperature, and inhibition of recovery and recrystallization of austenite by lowering rolling temperature, both of which result in refinement of crystal grains of a transformed microstructure after accelerated cooling that is subsequently performed. That is, the low-temperature toughness can be ensured by sufficient refinement of the crystal grains of bainite.

In contrast, rolling at a high temperature of 1,000°C or higher is important for ensuring the bonding between the cladding metal and the base steel of the clad steel plate. Lowering the rolling temperature caused by the reduction in product heating temperature may deteriorate the bonding, there is a limit to lowering the product heating temperature and the rolling temperature. Meanwhile, an increase in plate thickness reduces the cooling rate during accelerated cooling after rolling, thereby reducing the nucleation rate of bainite transformation. Therefore, in a thick clad steel plate having a plate thickness of more than 30 mm, it may be difficult to sufficiently refine the crystal grains of bainite.

The present invention has been developed in view of the above-mentioned current circumstances, and aims to provide a clad steel plate that has a tensile strength of 535 MPa or more, a DWTTSA-$_{30°C}$ value of 85% or more, and excellent heat affected zone (HAZ) toughness even at a plate thickness of more than 30 mm, and also to provide a method for manufacturing the clad steel plate, and a line pipe.

The tensile strength is tensile strength determined by conducting a tensile test in accordance with API-5L.

DWTTSA-$_{30°C}$ is percent ductile fracture determined by performing the DWTT test (test temperature: -30°C) in accordance with API-5L.

The term "excellent HAZ toughness" indicates that the absorbed energy (vE-$_{40°C}$), obtained from a Charpy impact test (test temperature: -40°C), is 200 J or more at the fusion line (FL), FL + 2 mm, and FL + 5 mm, at a location 2 mm below the outer surface of a seam weld, in accordance with DNV-OS-F101.

Solution to Problem

The inventors have conducted extensive research in order to develop a clad steel plate having excellent HAZ toughness while ensuring predetermined mechanical properties even at a plate thickness of more than 30 mm, and have found the following.

(A) To achieve excellent low-temperature toughness, it is effective to refine the microstructure of the base steel plate for increasing its resistance to brittle crack propagation. Specifically, it is effective for the base steel plate to have a steel microstructure mainly composed of bainite; at the 1/2 plate thickness position in the thickness direction of the base steel plate, an area fraction of bainite of 80% or more and an average crystal grain size of bainite of less than 20 μm.

(B) In order to conduct the above-described microstructure control, it is important to appropriately control the chemical composition and manufacturing conditions, particularly when a slab in which the material of the base steel plate and the material of the cladding metal are stacked is subjected to rolling and then a reheating-quenching-tempering process.

As described above, in order to sufficiently refine the crystal grains of the transformed microstructure in thick clad steel plates having a plate thickness of more than 30 mm, it is important to appropriately control the chemical composition and manufacturing conditions, particularly the conditions for the reheating-quenching-tempering process. In this regard, the reheating-quenching-tempering process makes it difficult to utilize precipitation strengthening of Nb and the like, and compared with TMCP and DQ-T, large amounts of alloying elements must be added to ensure tensile strength. Thus, martensite-austenite constituent easily forms in the HAZ, making it difficult to ensure the HAZ toughness.

To achieve both of enough tensile strength and excellent HAZ toughness, the inventors have conducted further studies and have found that by appropriately controlling the amounts of alloying elements contained, more specifically, by adjusting the chemical composition to mainly satisfy the following formulae (1), (2), (3), and (4), it is possible to achieve excellent HAZ toughness while ensuring predetermined mechanical properties, even in plate thicknesses of more than 30 mm.

$$0.40 \leq Ceq \leq 0.50 \quad \cdots \quad (1)$$

Here, Ceq is defined by the following formula.

Ceq = [C] + [Mn]/6 + ([Cu] + [Ni])/15 + ([Cr] + [Mo] + [V]) /5 [C], [Si], [Mn], [Cu], [Ni], [Cr], [Mo], [Nb], and [V] are the amounts (mass%) of C, Si, Mn, Cu, Ni, Cr, Mo, Nb, and V, respectively, contained in the base steel plate.

$$0.030 \leq [C] \leq 0.060 \quad \cdots \quad (2)$$

$$[Si] < 0.10 \quad \cdots \quad (3)$$

$$0.005 \leq [Nb] \leq 0.060 \quad \cdots \quad (4)$$

The present invention has been completed based on the above findings and as a result of further investigation.

The gist and configuration of the present invention are as described below.

[1] A clad steel plate includes a cladding metal bonded to one surface or both surfaces of a base steel plate, in which the base steel plate has a chemical composition containing, in mass%:

C: 0.030% or more and 0.060% or less,
Si: less than 0.10%,
Mn: 1.00% or more and 1.80% or less,
P: 0.015% or less,
S: 0.003% or less,
Al: 0.010% or more and 0.070% or less,
Nb: 0.005% or more and 0.060% or less,
Ti: 0.005% or more and 0.030% or less, and
N: 0.0010% or more and 0.0060% or less,
further containing:
one or two or more selected from:

Cu: 0.01% or more and 0.50% or less,
Ni: 0.01% or more and 0.50% or less,
Cr: 0.01% or more and 0.50% or less,
Mo: 0.01% or more and 0.50% or less,
V: 0.001% or more and 0.100% or less, and
Ca: 0.0005% or more and 0.0040% or less, and
satisfying a relationship represented by the following formula (1),
the balance being Fe and unavoidable impurities, and
in which the base steel plate has a steel microstructure in which
at a 1/2 plate thickness position in the thickness direction of the base steel plate, the area fraction of bainite is 80% or more, and the average crystal grain size of bainite is less than 20 μm,

$$0.40 \leq Ceq \leq 0.50 \quad \cdots \quad (1)$$

where Ceq is defined by the following formula:

$$Ceq = [C] + [Mn]/6 + ([Cu] + [Ni])/15 + ([Cr] + [Mo] + [V])/5$$

where [C], [Mn], [Cu], [Ni], [Cr], [Mo], and [V] are amounts (mass%) of C, Mn, Cu, Ni, Cr, Mo, and V, respectively, contained in the base steel plate.

[2] In the clad steel plate described in [1], the cladding metal is a Ni-based alloy or an austenitic stainless steel.

[3] A method for manufacturing a clad steel plate includes: a hot rolling step of subjecting a slab including at least one stacked set of a material having the chemical composition of the base steel plate described in [1] and a material for a cladding metal, to hot rolling to obtain a rolled plate including the base steel plate and the cladding metal,

a quenching treatment step of subjecting the rolled plate to heating to a heating temperature: an $Ac_3$ temperature or higher and 1,000°C or lower as measured at a 1/2 plate thickness position in the thickness direction of the base steel plate, and after the heating, subjecting the rolled plate to cooling at a cooling start temperature: an $Ar_3$ temperature or higher in terms of a surface temperature, at an average cooling rate: 5 °C/s or greater, and at a cooling stop temperature: 500°C or lower as measured at the 1/2 plate thickness position in the thickness direction of the base steel plate, and

a tempering treatment step of subjecting the rolled plate to tempering in a temperature range of 350°C or higher and 650°C or lower as measured at the 1/2 plate thickness position in the thickness direction of the base steel plate.

[4] In the method for manufacturing a clad steel plate described in [3], the slab is a stack of a material for the base steel plate, a material for the cladding metal, a material for the cladding metal, and a material for the base steel plate, in this order.

[5] A line pipe using the clad steel plate described in [1] or [2].

Advantageous Effects of Invention

According to the present invention, it is possible to provide a clad steel plate having a tensile strength of 535 MPa or more, a DWTTSA-$_{30°C}$ value of 85% or more, and excellent HAZ toughness even at a plate thickness of more than 30 mm.

The above-described clad steel plate is extremely useful in industry because it can be used for line pipes for transporting oil and natural gas, which are exposed to severe corrosive environments.

Description of Embodiments

The present invention will be specifically described below.

The present invention is directed to a clad steel plate in which a cladding metal is bonded to one surface or both surfaces of a base steel plate. The plate thickness of the clad steel plate is not particularly limited, and may be more than 30 mm. The plate thickness of the clad steel plate may be 45 mm or less. The plate thickness of the clad steel plate as referred to herein is the total plate thickness of those of the base steel plate and the cladding metal.

The base steel plate may have a plate thickness of 5 to 42 mm, and the cladding metal may have a plate thickness of 1.5 to 4.0 mm.

The chemical composition of the base steel plate in the clad steel plate of the present invention will be described. The units for chemical compositions are all "mass%"; they will be indicated simply as "%" hereinafter, unless otherwise specified.

1. Chemical Composition of Base Steel Plate

C: 0.030% or More and 0.060% or Less

C is an element that contributes to precipitation strengthening in the form of carbides. When the C content is less than 0.030%, sufficient strength cannot be ensured. When the C content is more than 0.060%, the toughness of the base steel plate and the HAZ toughness deteriorate. Therefore, the C content is 0.030% or more and 0.060% or less. The C content is preferably 0.030% or more and less than 0.050%.

Si: Less than 0.10%

Si is not soluble in cementite and thus delays the formation of cementite, promotes the formation of a martensite-austenite constituent, and delays the decomposition thereof, thereby leading to deterioration in the HAZ toughness. Therefore, the Si content is less than 0.10%. The Si content is preferably 0.08% or less.

The lower limit of the Si content is not particularly limited, and may be 0%.

Mn: 1.00% or More and 1.80% or Less

Mn is an element that is added to ensure strength and toughness. When the Mn content is less than 1.00%, the effect is insufficient. When the Mn content is more than 1.80%, the weldability deteriorates. Therefore, the Mn content is 1.00% or more and 1.80% or less. The Mn content is preferably 1.30% or more.

P: 0.015% or Less

P degrades the weldability. Therefore, the P content is 0.015% or less, preferably 0.010% or less. The lower limit of the P content is not particularly limited, and may be 0%.

S: 0.003% or Less

S is typically present in steel in the form of sulfide inclusions and degrades the ductility and toughness. Therefore, it is preferable to reduce S as much as possible, and the S content is 0.003% or less, preferably 0.001% or less. The lower limit of the S content is not particularly limited, and may be 0%.

Al: 0.010% or More and 0.070% or Less

Al is added for deoxidization, but when the Al content is less than 0.010%, this effect is insufficient. When the Al content is more than 0.070%, alumina clusters are formed, leading to deterioration in the ductility. Therefore, the Al content is 0.010% or more and 0.070% or less. The Al content is preferably 0.010% or more and 0.040% or less.

Nb: 0.005% or More and 0.060% or Less

Nb is effective in increasing the strength of the base steel plate by precipitation strengthening and an increase in hardenability. The pinning effect due to the formation of carbonitrides inhibits the coarsening of austenite, thereby Nb contributes to an improvement in the toughness of the base steel plate. When the Nb content is less than 0.005%, the effect is insufficient. A Nb content of more than 0.060% leads to the formation of a martensite-austenite constituent and coarse Nb carbonitrides, thereby resulting in deterioration in the HAZ toughness. Therefore, the Nb content is 0.005% or more and 0.060% or less. The Nb content is preferably 0.010% or more. The Nb content is preferably 0.040% or less.

Ti: 0.005% or More and 0.030% or Less

When Ti is contained in an amount of 0.005% or more, the pinning effect due to the formation of nitrides inhibits the coarsening of austenite, thereby Ti contributes to ensuring the toughness of the base steel plate and the HAZ toughness. However, when the Ti content is more than 0.030%, the nitrides coarsen and serve as the starting points of brittle fracture or ductile fracture. Therefore, the Ti content is 0.005% or more and 0.030% or less. The Ti content is preferably 0.020% or less.

N: 0.0010% or More and 0.0060% or Less

When N is contained in an amount of 0.0010% or more, the pinning effect due to the formation of nitrides inhibits the coarsening of austenite, thereby N contributes to ensuring the toughness of the base steel plate and the HAZ toughness. However, when the N content is more than 0.0060%, the HAZ toughness deteriorates. Therefore, the N content is 0.0010% or more and 0.0060% or less. The N content is preferably 0.0020% or more. The N content is preferably 0.0050% or less.

In order to sufficiently provide the pinning effect due to nitride formation, it is preferable to adjust the ratio of the Ti content to the N content. Specifically, in mass%, when the Ti content/N content ratio is less than 2.0 or when the Ti content/N content ratio is more than 3.5, the pinning effect due to nitride formation is not sufficiently provided, and austenite coarsens, which may result in deterioration in the HAZ toughness. Therefore, the Ti content/N content ratio is preferably 2.0 or more. Further, the Ti content/N content ratio is preferably 3.5 or less.

One or Two or More Selected from Cu: 0.01% or More and 0.50% or Less, Ni: 0.01% or More and 0.50% or Less, Cr: 0.01% or More and 0.50% or Less, Mo: 0.01% or More and 0.50% or Less, V: 0.001% or More and 0.100% or Less, and Ca: 0.0005% or More and 0.0040% or Less

All of Cu, Ni, Cr, and Mo are elements that improve hardenability and contribute to increasing the strength of the base steel plate. V contributes to increasing the strength of the base steel plate by precipitation strengthening. In order to provide the effects, when one or two or more of Cu, Ni, Cr, Mo, and V are contained, Cu, Ni, Cr, and Mo are each 0.01% or more, and V is 0.001% or more. Each of Cu, Ni, Cr, and Mo is preferably 0.05% or more. V is preferably 0.010% or more.

When any of the amount of Cu, Cr, and Mo contained is more than 0.50%, the HAZ toughness may deteriorate. Therefore, when Cu, Cr, and Mo are contained, the amounts thereof are each 0.50% or less. Each of Cu, Cr, and Mo is preferably 0.40% or less.

Meanwhile, a V content of more than 0.100% may lead to deterioration in the HAZ toughness. Therefore, when V is contained, the V content is 0.100% or less.

Ni is an expensive element; thus, the inclusion of a large amount of Ni leads to an increase in costs. Therefore, when Ni is contained, the Ni content is 0.50% or less, preferably 0.40% or less.

Ca has the function of fixing S in the steel and improving the toughness of the base steel plate. In order to provide this effect, Ca is contained in an amount of 0.0005% or more. When the Ca content is more than 0.0040%, the number of inclusions in the steel increases, potentially causing deterioration in the toughness of the base steel plate and the HAZ toughness. Therefore, when Ca is contained, the Ca content is 0.0005% or more and 0.0040% or less. The Ca content is preferably 0.0010% or more. The Ca content is preferably 0.0030% or less.

The fundamental components have been described above. Furthermore, the value of Ceq is appropriately controlled as given in the following formula (1).

$$0.40 \leq Ceq \leq 0.50 \quad \cdots \quad (1)$$

Here, Ceq is defined by the following equation:

$$Ceq = [C] + [Mn]/6 + ([Cu] + [Ni])/15 + ([Cr] + [Mo] + [V])/5$$

where [C], [Mn], [Cu], [Ni], [Cr], [Mo], and [V] are amounts (mass%) of C, Mn, Cu, Ni, Cr, Mo, and V, respectively, contained in the base steel plate.

$$0.40 \leq Ceq \leq 0.50$$

Ceq is a numerical value that serves as an index of the hardness of HAZ, but also serves as an index of the strength of the base steel plate.

When the Ceq value is less than 0.40, sufficient strength of the base steel plate cannot be ensured. When the value of Ceq is more than 0.50, the toughness of the base steel plate and the HAZ toughness deteriorate. Therefore, Ceq is 0.40 or more and 0.50 or less. Ceq is preferably 0.40 or more and 0.48 or less.

The components other than those described above are Fe and unavoidable impurities.

That is, the base steel plate has a chemical composition containing, in mass%, C: 0.030% or more and 0.060% or less, Si: less than 0.10%, Mn: 1.00% or more and 1.80% or less, P: 0.015% or less, S: 0.003% or less, Al: 0.010% or more and 0.070% or less, Nb: 0.005% or more and 0.060% or less, Ti: 0.005% or more and 0.030% or less, and N: 0.0010% or more and 0.0060% or less,

further containing one or two or more selected from Cu: 0.01% or more and 0.50% or less, Ni: 0.01% or more and 0.50% or less, Cr: 0.01% or more and 0.50% or less, Mo: 0.01% or more and 0.50% or less, V: 0.001% or more and 0.100% or less, and Ca: 0.0005% or more and 0.0040% or less, and

satisfying the relationship represented by the above-described formula (1), the balance being Fe and unavoidable impurities.

2. Steel Microstructure of Base Steel Plate

The base steel plate has a steel microstructure in which at a 1/2 plate thickness position in the thickness direction of the base steel plate, the area fraction of bainite is 80% or more, and the average crystal grain size of bainite is less than 20 $\mu$m.

Area Fraction of Bainite at 1/2 Plate Thickness Position in Thickness Direction of Base Steel Plate: 80% or More

Bainite is an important microstructure for achieving both strength and low-temperature toughness. In addition, bainite effectively contributes to improving the strength of the steel plate by transformation strengthening.

For this reason, the steel microstructure of the base steel plate needs to be mainly bainite. Specifically, the area fraction of bainite to the entire steel microstructure at the 1/2 plate thickness position in the plate thickness direction of the base steel plate (hereinafter, referred to simply as a "1/2 plate thickness position") needs to be 80% or more. The area fraction of bainite is preferably 85% or more. The area fraction of bainite may be 100%.

As described above, the steel microstructure of the base steel plate needs to be basically composed of bainite. However, as the remaining microstructures other than bainite, a martensite-austenite constituent, ferrite, and cementite may be contained when they are present in trace amounts. These residual microstructures are acceptable as long as the total area fraction thereof is 20% or less. The area fraction of the remaining microstructures may be 0%. When the remaining microstructure is more than 20%, the area fraction of bainite is small, and strength and low-temperature toughness do not go together.

The area fraction of each phase at the 1/2 plate thickness position was determined as described below.

An L-cross-section (a cross-section parallel to the rolling direction and parallel to the normal direction of the rolling surface) at the 1/2 plate thickness position in the thickness direction of the base steel plate was mirror-polished. Thereafter, in order to identify the martensite-austenite constituent, the base steel plate was electrolytically etched in the solution: 100 ml of distilled water + 25 g of sodium hydroxide + 5 g of picric acid. To identify other microstructures, the base steel plate was etched with nital as an etching solution. Thereafter, a randomly selected area of $1.2 \times 10^{-2}$ mm$^2$ is observed at a magnification of 2,000 with a scanning electron microscope (SEM), and the area fraction is determined by image analysis.

Average Crystal Grain Size of Bainite: Less Than 20 μm

The grain boundaries of bainite act as resistance to brittle crack propagation; thus, refinement of the crystal grains contributes to an improvement in low-temperature toughness. Therefore, the average crystal grain size of bainite is less than 20 μm. Although there is no particular lower limit, the average crystal grain size of bainite is preferably 5 μm or more.

Here, the average crystal grain size of bainite is determined as described below.

That is, an L-cross-section (parallel to the rolling direction and parallel to the normal direction of the rolling surface) at the 1/2 plate thickness position in the thickness direction of the base steel plate is mirror-polished. Then, the crystal orientation of a randomly selected $1.2 \times 10^{-2}$ mm$^2$ region is measured by an electron back-scatter diffraction pattern (EBSP). The region where the angle difference between adjacent pixels is 15° or more is determined as a grain boundary by image analysis.

The average crystal grain size $d_{area}$ (μm) is calculated from the area $a_i$ (μm$^2$) occupied by each crystal grain and the equivalent circle diameter $d_i$ (μm) of each crystal grain by the following formula.

$$d_{area} = \Sigma(a_i \cdot d_i) / \Sigma a_i$$

3. Cladding Metal

In the clad steel plate of the present invention, the cladding metal is bonded to one surface or both surfaces of the base steel plate. The cladding metal is preferably made of a corrosion-resistant alloy.

The cladding metal is not particularly limited. Examples thereof include Ni-based alloys and austenitic stainless steels.

In particular, Ni-based alloys are preferred because they exhibit high stress-corrosion cracking resistance in environments where partial pressure of high hydrogen sulfide is high (i.e., sour environments).

The Ni-based alloy is, for example, Alloy 625 or Alloy 825. From the viewpoint of stress-corrosion cracking resistance, Alloy 625 is particularly preferred.

Alloy 625 is a Ni-based alloy equivalent to NCF625 of JIS G 4902. In particular, a Ni-based alloy having a chemical composition containing, in mass%, C: 0.030% or less, Si: 0.02% to 0.50%, Mn: 0.02% to 0.50%, P: 0.015% or less, S: 0.015% or less, Cr: 20.0% to 23.0%, Mo: 8.0% to 10.0%, Fe: 5.0% or less, Al: 0.02% to 0.40%, Ti: 0.10% to 0.40%, and the total amount of Nb and Ta: 3.15% to 4.15%, the balance being Ni and unavoidable impurities, is preferable.

Alloy 825 is a Ni-based alloy equivalent to NCF825 of JIS G 4902. In particular, a Ni-based alloy having a chemical composition containing, in mass%, C: 0.020% or less, Si: 0.50% or less, Mn: 1.00% or less, P: 0.030% or less, S: 0.0050% or less, Cu: 1.50% to 3.00%, Ni: 38.0% to 46.0%, Cr: 19.5% to 23.5%, Mo: 2.50% to 3.50%, Al: 0.01% to 0.20%, and Ti: 0.60% to 1.20%, the balance being Fe and unavoidable impurities, is preferred.

The preferred chemical compositions of the above-described Alloy 625 and Alloy 825 will be described below. The units for chemical compositions are all "mass%"; they will be indicated simply as "%" hereinafter, unless otherwise specified.

(1) Preferred Chemical Composition of Alloy 625

C: 0.030% or Less

C is an element that precipitates in the form of carbides at grain boundaries through the thermal history during the manufacture of clad steel plate, thereby leading to deterioration in the corrosion resistance. Therefore, the C content is preferably 0.030% or less. The C content is more preferably 0.020% or less.
The lower limit of the C content is not particularly limited, and may be 0%.

Si: 0.02% to 0.50%

Si is added for deoxidization. When the Si content is less than 0.02%, the effect is insufficient. When the Si content is more than 0.50%, the corrosion resistance deteriorates. Therefore, the Si content is preferably 0.02% to 0.50%, more preferably 0.02% to 0.20%.

Mn: 0.02% to 0.50%

Mn is added for deoxidization. When the Mn content is less than 0.02%, the effect is insufficient. When the Mn content is more than 0.50%, the corrosion resistance deteriorates. Therefore, the Mn content is preferably 0.02% to 0.50%, more preferably 0.02% to 0.15%.

P: 0.015% or Less

P is an impurity element that segregates at grain boundaries and degrades the corrosion resistance. Therefore, the P content is preferably 0.015% or less, more preferably 0.010% or less. The lower limit of the P content is not particularly limited, and may be 0%.

S: 0.015% or Less

As with P, S is an impurity element that segregates at grain boundaries and degrades the corrosion resistance. Therefore, the S content is preferably 0.015% or less, more preferably 0.0010% or less. The lower limit of the S content is not particularly limited, and may be 0%.

Cr: 20.0% to 23.0%

Cr forms a highly protective oxide film on the metal surface, improving the pitting corrosion resistance and the intergranular corrosion resistance. Cr, when added in combination with Ni, improves the stress-corrosion cracking resistance in a sour environment. However, the Cr content needs to be balanced with Ni and other alloys. From this viewpoint, the Cr content is preferably 20.0% to 23.0%, more preferably 21.5% to 23.0%.

Mo: 8.0% to 10.0%

Mo improves the pitting corrosion resistance and the crevice corrosion resistance. Mo, when added in combination with Ni, improves the stress-corrosion cracking resistance in a sour environment. However, the Mo content needs to be balanced with Ni and other alloys. From this viewpoint, the Mo content is preferably 8.0% to 10.0%, more preferably 8.5% to 10.0%.

Fe: 5.0% or Less

Fe is an impurity that is inevitably contained in when ferrochromium, or ferromolybdenum is used as a raw material. When the Fe content is more than 5.0%, the corrosion resistance deteriorates. Therefore, the Fe content is preferably 5.0% or less, more preferably 3.5% or less. The lower limit of the Fe content is not particularly limited, and may be 0%.

Al: 0.02% to 0.40%

Al is an effective deoxidizing element. When the Al content is less than 0.02%, the effect is insufficient. When the Al content is more than 0.40%, the stress-corrosion cracking resistance deteriorates. Therefore, the Al content is preferably 0.02% to 0.40%, more preferably 0.02% to 0.25%.

Ti: 0.10% to 0.40%

Ti is effective in fixing C. When the Ti content is less than 0.10%, the fixation of C is incomplete, and carbides precipitate, resulting in degradation of the corrosion resistance. When the Ti content is more than 0.40%, Ti precipitates in the form of an intermetallic compound, thereby reducing the bondability with the base steel plate. Therefore, the Ti content is preferably 0.10% to 0.40%, more preferably 0.10% to 0.30%.

Total Amount of Nb and Ta: 3.15% to 4.15%

Both Nb and Ta are effective in fixing C. When the total amount (total content) of Nb and Ta is less than 3.15%, the effect is insufficient. When the total amount of Nb and Ta is more than 4.15%, Nb and Ta form an intermetallic compound having a low melting point, thereby reducing hot workability. Therefore, the total amount of Nb and Ta is preferably 3.15% to 4.15%.

The components other than those described above are Ni and unavoidable impurities. Ni is an element that improves the corrosion resistance, and in particular, significantly improves the stress-corrosion cracking resistance in a sour environment. For this reason, the Ni content is preferably 58% or more.

(2) Preferred Chemical Composition of Alloy 825

C: 0.020% or Less

C is an element that precipitates in the form of carbides at grain boundaries through the thermal history during the manufacture of clad steel plate, thereby leading to deterioration in the corrosion resistance. Therefore, the C content is preferably 0.020% or less, more preferably 0.015% or less. The lower limit of the C content is not particularly limited, and may be 0%.

Si: 0.50% or Less

When the Si content is more than 0.50%, Si remains as a nonmetallic inclusion, thereby degrading the corrosion resistance. Therefore, the Si content is preferably 0.50% or less, more preferably 0.30% or less. The lower limit of the Si content is not particularly limited. From the viewpoint of providing a sufficient deoxidizing effect, the lower limit is preferably 0.02% or more.

Mn: 1.00% or Less

When the Mn content is more than 1.00%, the corrosion resistance deteriorates. Therefore, the Mn content is preferably 1.00% or less, more preferably 0.50% or less. The lower limit of the Mn content is not particularly limited. From the viewpoint of providing a sufficient deoxidizing effect, the lower limit is preferably 0.02% or more.

P: 0.030% or Less

P is an impurity element that segregates at grain boundaries and degrades the corrosion resistance. Therefore, the P content is preferably 0.030% or less, more preferably 0.020% or less. The lower limit of the P content is not particularly limited, and may be 0%.

S: 0.0050% or Less

As with P, S is an impurity element that segregates at grain boundaries and degrades the corrosion resistance. Therefore, the S content is preferably 0.0050% or less, more preferably 0.0010% or less. The lower limit of the S content is not particularly limited, and may be 0%.

Cu: 1.50% to 3.00%

Cu is an element that is effective in improving corrosion resistance in a sulfuric acid environment. When the Cu content is less than 1.50%, the effect is insufficient. When the Cu content is more than 3.00%, the effect is saturated. Therefore, the Cu content is preferably 1.50% to 3.00%, more preferably 1.80% to 3.00%.

Ni: 38.0% to 46.0%

Ni is an element that improves the corrosion resistance, and in particular, significantly improves the stress-corrosion cracking resistance in a sour environment. However, Ni is a very expensive element; thus, the addition of a large amount of Ni leads to an increase in costs. For this reason, the Ni content needs to be considered in terms of the balance between the effect of improving corrosion resistance and the cost. From this viewpoint, the Ni content is preferably 38.0% to 46.0%.

Cr: 19.5% to 23.5%

Cr forms a highly protective oxide film on the metal surface, improving the pitting corrosion resistance and the intergranular corrosion resistance. Cr, when added in combination with Ni, improves the stress-corrosion cracking resistance in a sour environment. However, the Cr content needs to be balanced with Ni and other alloys. From this viewpoint, the Cr content is preferably 19.5% to 23.5%, more preferably 21.5% to 23.5%.

Mo: 2.50% to 3.50%

Mo improves the pitting corrosion resistance and the crevice corrosion resistance. Mo, when added in combination with Ni, improves the stress-corrosion cracking resistance in a sour environment. However, the Mo content needs to be balanced with Ni and other alloys. From this viewpoint, the Mo content is preferably 2.50% to 3.50%, more preferably 3.00% to 3.50%.

Al: 0.01% to 0.20%

Al is an effective deoxidizing element. When the Al content is less than 0.01%, the effect is insufficient. When the Al content is more than 0.20%, the stress-corrosion cracking resistance deteriorates. Therefore, the Al content is preferably 0.01% to 0.20%, more preferably 0.10% or more, and more preferably 0.15% or less.

Ti: 0.60% to 1.20%

Ti is effective in fixing C. When the Ti content is less than 0.60%, the fixation of C is incomplete, and carbides precipitate, resulting in degradation of the corrosion resistance. When the Ti content is more than 1.20%, Ti precipitates in the form of an intermetallic compound, thereby reducing the bondability with the base steel plate. Therefore, the Ti content is preferably 0.60% to 1.20%, more preferably 0.65% to 1.20%.
The components other than those described above are Fe and unavoidable impurities.
The preferred chemical compositions of Alloy 625 and Alloy 825 have been described above. Examples of corrosion-resistant alloys other than Ni-based alloys include austenitic stainless steels.
Austenitic stainless steels are, for example, austenitic stainless steels defined by JIS. Examples thereof include SUS304, SUS316, SUS304L, and SUS316L.
Among them, an austenitic stainless steel having a chemical composition containing, in mass%, C: 0.030% or less, Si: 1.00% or less, Mn: 2.00% or less, P: 0.045% or less, S: 0.030% or less, Ni: 12.00% to 15.00%, Cr: 16.00% to 18.00%, and Mo: 2.00% to 3.00%, the balance being Fe and unavoidable impurities, is preferred.
The preferred chemical composition of the above-described austenitic stainless steel will be described below. The units for chemical compositions are all "mass%"; however, unless otherwise specified, they will be indicated simply as "%" hereinafter.

(3) Preferred Chemical Composition of Austenitic Stainless Steel

C: 0.030% or Less

C is an element that precipitates in the form of carbides at grain boundaries through the thermal history during the manufacture of clad steel plate, thereby leading to deterioration in the corrosion resistance. Therefore, the C content is preferably 0.030% or less, more preferably 0.020% or less, and even more preferably 0.015% or less. The lower limit of the C content is not particularly limited, and may be 0%.

Si: 1.00% or Less

When the Si content is more than 1.00%, Si remains as a nonmetallic inclusion, thereby degrading the corrosion resistance. Therefore, the Si content is preferably 1.00% or less, more preferably 0.75% or less. The lower limit of the Si content is not particularly limited, and may be 0%.

Mn: 2.00% or Less

When the Mn content is more than 2.00%, the corrosion resistance deteriorates. Therefore, the Mn content is preferably 2.00% or less, more preferably 1.40% or less, and even more preferably 1.00% or less. The lower limit of the Mn content is not particularly limited, and may be 0%.

P: 0.045% or Less

P is an impurity element that segregates at grain boundaries and degrades the corrosion resistance. Therefore, the P content is preferably 0.045% or less, more preferably 0.030% or less. The lower limit of the P content is not particularly limited, and may be 0%.

S: 0.030% or Less

As with P, S is an impurity element that segregates at grain boundaries and degrades the corrosion resistance. Therefore, the S content is preferably 0.030% or less, more preferably 0.010% or less. The S content is even more preferably 0.001% or less. The lower limit of the S content is not particularly limited, and may be 0%.

Ni: 12.00% to 15.00%

Ni is an element that improves the corrosion resistance, and in particular, significantly improves the stress-corrosion cracking resistance in a sour environment. However, Ni is a very expensive element; thus, the addition of a large amount of Ni leads to an increase in costs. For this reason, the Ni content needs to be considered in terms of the balance between the effect of improving corrosion resistance and the cost. From this viewpoint, the Ni content is preferably 12.00% to 15.00%. The Ni content is more preferably 12.50% or more. The Ni content is more preferably 14.50% or less.

Cr: 16.00% to 18.00%

Cr forms a highly protective oxide film on the metal surface, improving the pitting corrosion resistance and the intergranular corrosion resistance. Cr, when added in combination with Ni, improves the stress-corrosion cracking resistance in a sour environment. However, the Cr content needs to be balanced with Ni and other alloys. From this viewpoint, the Cr content is preferably 16.00% to 18.00%. The Cr content is more preferably 16.50% or more. The Cr content is more preferably 17.50% or less.

Mo: 2.00% to 3.00%

Mo improves the pitting corrosion resistance and the crevice corrosion resistance. Mo, when added in combination with Ni, improves the stress-corrosion cracking resistance in a sour environment. However, the Mo content needs to be balanced with Ni and other alloys. From this viewpoint, the Mo content is preferably 2.00% to 3.00%. The Mo content is more preferably 2.20% or more. The Mo content is more preferably 2.80% or less.

The components other than those described above are Fe and unavoidable impurities.

4. Manufacturing Method

A method for manufacturing the clad steel plate of the present invention will be described below.

A method for manufacturing a clad steel plate according to an embodiment of the present invention includes: a hot rolling step of subjecting a slab including at least one stacked set of a material having the chemical composition of the base steel plate described above and a material for a cladding metal, to hot rolling to obtain a rolled plate including the base steel plate and the cladding metal,

a quenching treatment step of subjecting the rolled plate to heating to a heating temperature: an $Ac_3$ temperature or higher and 1,000°C or lower as measured at a 1/2 plate thickness position in the thickness direction of the base steel plate, and after the heating, subjecting the rolled plate to cooling at a cooling start temperature: an $Ar_3$ temperature or higher in terms of a surface temperature, at an average cooling rate: 5 °C/s or greater, and at a cooling stop temperature: 500°C or lower as measured at the 1/2 plate thickness position in the thickness direction of the base steel plate, and

a tempering step of subjecting the rolled plate to tempering in a temperature range of 350°C or higher and 650°C or lower as measured at the 1/2 plate thickness position in the thickness direction of the base steel plate.

The slab is obtained by stacking the material for the base steel plate and the material for the cladding metal in the order of, for example, (a) the material for the base steel plate and the material for the cladding metal (material for base steel plate /material for cladding metal), or (b) the material of the base steel plate, the material for the cladding metal, the material for the cladding metal, and the material for the base steel plate (material for base steel plate /material for cladding metal/material for cladding metal/material for base steel plate, in this order), and then performing electron beam welding or laser beam welding in a vacuum (negative pressure), specifically, in a vacuum having a pressure of $10^{-4}$ torr or less to temporarily bond the material for the base steel plate and the material for the cladding metal.

In the case of using the slab of the form (b), a separating agent is applied in advance between the material for the cladding metal and another material for the cladding metal. After the completion of the tempering treatment, the upper portion and the lower portion are separated, resulting in clad steel plates each having the cladding metal bonded to one surface of the base steel plate.

Hot Rolling

The slab is subjected to hot rolling to obtain a rolled plate including the base steel plate and the cladding metal. The hot rolling conditions are not particularly limited. From the viewpoint of ensuring the bonding between the cladding metal and the base steel, the followings are preferrable: when Alloy 625 is used as the material for the cladding metal, hot rolling is preferably performed at a rolling reduction ratio of 2.0 or more in a temperature range such that the surface temperature is 950°C or higher; when a Ni-based alloy, such as Alloy 825, or an austenitic stainless steel is used as the material for the cladding metal, hot rolling is preferably performed at a rolling reduction ratio of 1.5 or more in a temperature range such that the surface temperature is 950°C or higher. The rolling reduction ratio in the temperature range such that the surface temperature is 950°C or higher is defined as [plate thickness of slab before hot rolling] / [plate thickness of slab after rolling in temperature range such that surface temperature is 950°C or higher].

Quenching Treatment

In the quenching treatment, the rolled plate is subjected to heating to a heating temperature of an $Ac_3$ temperature or higher and 1,000°C or lower as measured at a 1/2 plate thickness position in the thickness direction of the base steel plate, and after the heating, cooling is performed at a cooling start temperature of an $Ar_3$ temperature or higher in terms of a surface temperature, at an average cooling rate of 5 °C/s or greater, and at a cooling stop temperature of 500°C or lower as measured at the 1/2 plate thickness position in the thickness direction of the base steel plate.

Heating Temperature: $Ac_3$ Temperature or Higher and 1,000°C or Lower

When the heating temperature is lower than the $Ac_3$ temperature, the austenite transformation is not completed, resulting in an inhomogeneous final microstructure and deterioration in the toughness of the base steel plate. When the heating temperature is higher than 1,000°C, Nb carbonitrides may dissolve. Since Nb carbonitrides act on the pinning of austenite, the dissolution of Nb carbonitrides causes the austenite to coarsen, leading to deterioration in the toughness of the base steel plate. Therefore, the heating temperature is the $Ac_3$ temperature or higher and 1,000°C or lower, preferably 900°C to 1,000°C. The $Ac_3$ transformation temperature can be calculated by the following formula.

$$Ac_3 \ (°C) = 912.0 - 230.5 \times C + 31.6 \times Si - 20.4 \times Mn - 39.8 \times Cu - 18.1 \times Ni - 14.8 \times Cr + 16.8 \times Mo$$

Here, the element symbols in the above formula indicate the amounts (mass%) of the respective elements contained in the base steel plate of the rolled plate. When an element is not contained, its value is set to zero.

The heating temperature as referred to herein is a temperature at the 1/2 plate thickness position in the thickness direction of the base steel plate portion of the rolled plate.

Cooling Start Temperature: $Ar_3$ Temperature or Higher in Terms of Surface Temperature

When the cooling start temperature is lower than the $Ar_3$ temperature in terms of the surface temperature, ferrite may be formed in the base steel plate prior to bainite transformation. Formation of ferrite potentially makes it difficult to ensure the target strength. Therefore, the cooling start temperature is the $Ar_3$ temperature or higher in terms of the surface temperature of the rolled plate. There is no particular upper limit, but it is preferably 1,000°C or lower. The $Ar_3$ temperature can be calculated by the following formula.

$$Ar_3 \text{ (°C)} = 910 - 310 \times C - 80 \times Mn - 20 \times Cu - 15 \times Cr - 55 \times Ni - 80 \times Mo$$

Here, the element symbols in the above formula indicate the amounts (mass%) of the respective elements contained in the base steel plate portion of the rolled plate. When an element is not contained, its value is set to zero.

Average Cooling Rate: 5 °C/s or More

When the average cooling rate is less than 5°C/s, the crystal grains of the transformed microstructure of the base steel plate coarsen, thereby leading to deterioration in the toughness. In addition, it is difficult to ensure the desired strength. Therefore, the average cooling rate is 5 °C/s or more. Although there is no particular upper limit, the average cooling rate is preferably 50 °C/s or less.

The average cooling rate as referred to herein is determined by dividing the difference (°C) between the cooling start temperature (°C) and the cooling stop temperature (°C) at the 1/2 plate thickness position in the thickness direction of the base steel plate portion of the rolled plate by the cooling time (s).

Cooling Stop Temperature: 500°C or Lower

When the cooling stop temperature is higher than 500°C, microstructures such as coarse cementite and a martensite-austenite constituent are formed in the base steel plate. These microstructures adversely affect the toughness and the Charpy absorbed energy. Therefore, the cooling stop temperature is 500°C or lower. The cooling stop temperature is preferably 300°C or lower. Although there is no particular restriction on the lower limit, the cooling stop temperature is preferably 25°C or higher.

The cooling stop temperature as referred to herein is the temperature at the 1/2 plate thickness position in the thickness direction of the base steel plate portion of the rolled plate.

Tempering Treatment

Tempering Temperature: 350°C or Higher and 650°C or Lower

After the above quenching treatment, the rolled plate is subjected to tempering by heating. When the tempering temperature is lower than 350°C, the martensite-austenite constituent is discomposed insufficiently and dislocations recover, both of which adversely affect the toughness of the base steel plate, are not sufficiently decomposed or recovered, resulting in deterioration in the toughness of the base steel plate. When the tempering temperature is higher than 650°C, precipitates such as cementite coarsen, leading to deterioration in the toughness of the base steel plate. In addition, the formation of precipitates may degrade the corrosion resistance of the cladding metal. Therefore, the tempering temperature is 350°C or higher and 650°C or lower.

The tempering temperature is preferably 400°C or higher. The tempering temperature is preferably 600°C or lower, more preferably 550°C or lower.

The tempering temperature as referred to herein is the temperature at the 1/2 plate thickness position in the thickness direction of the base steel plate portion of the rolled plate.

The holding time at the tempering temperature is preferably 5 minutes or more and 60 minutes or less from the viewpoints of decomposition of the martensite-austenite constituent, recovery of dislocations, and formation and coarsening of precipitates.

EXAMPLES

A slab was formed by stacking a material for a base steel plate, the material having the chemical composition (the balance being Fe and unavoidable impurities) of the base steel plate given in Table 1, and a Ni-based alloy (Alloy 625) having the chemical composition (the balance being Ni and unavoidable impurities) given in Table 2, a Ni-based alloy (Alloy 825) having the chemical composition (the balance being Fe and unavoidable impurities) given in Table 3, or an austenitic stainless steel (SUS316L) having the chemical composition (the balance being Fe and unavoidable impurities) given in Table 4, in the order of (a) material for base steel plate/material for cladding metal, or (b) material for base steel plate/material for cladding metal/material for cladding metal/material for base steel plate. The slab was subjected to hot rolling to form a rolled plate including the base steel plate and the cladding metal. The resulting rolled plate was then subjected to quenching and tempering under conditions given in Table 5, thereby producing a clad steel plate having a plate thickness of 33 mm in total of the base steel plate and the cladding metal (the plate thickness of the base steel plate of 30 mm, and the plate thickness of the cladding metal of 3 mm). Among the slabs that were each a stack of (a) material for base steel plate/material for cladding metal stacked in this order, and the slabs that were each a stack of (b) material for base steel plate/material for cladding metal/material for cladding metal/material for base steel plate stacked in this order, (a) was used for Nos. 21 to 24, and (b) was used for the others.

[Table 1]

| Base steel No. | Chemical composition of base steel plate (mass%) | | | | | | | | | | | | | | | Ceq | AC3 (°C) | Ar₃ (°C) | Remarks |
|---|---|---|---|---|---|---|---|---|---|---|---|---|---|---|---|---|---|---|---|
| | C | Si | Mn | P | S | Al | Nb | Ti | N | Cu | Ni | Cr | Mo | V | Ca | | | | |
| A1 | 0.018 | 0.06 | 0.95 | 0.007 | 0.0015 | 0.037 | 0.051 | 0.010 | 0.0042 | 0.42 | 0.42 | 0.38 | 0.36 | 0.050 | 0.0013 | 0.390 | 866 | 762 | Comparative steel |
| A2 | 0.038 | 0.09 | 1.60 | 0.008 | 0.0013 | 0.050 | 0.055 | 0.014 | 0.0046 | 0.44 | 0.43 | 0.18 | 0.21 | 0.002 | 0.0015 | 0.441 | 849 | 718 | Conforming steel |
| A3 | 0.040 | 0.03 | 1.30 | 0.003 | 0.0003 | 0.035 | 0.030 | 0.010 | 0.0044 | 0.05 | 0.04 | 0.44 | 0.38 | 0.001 | 0.0018 | 0.427 | 874 | 753 | Conforming steel |
| A4 | 0.049 | 0.05 | 1.68 | 0.007 | 0.0019 | 0.025 | 0.032 | 0.015 | 0.0056 | 0.43 | 0.44 | 0.21 | 0.25 | 0.029 | 0.0014 | 0.485 | 844 | 704 | Conforming steel |
| A5 | 0.045 | 0.05 | 1.68 | 0.008 | 0.0014 | 0.037 | 0.030 | 0.010 | 0.0040 | 0.13 | 0.13 | 0.21 | 0.27 | 0.003 | 0.0019 | 0.439 | 863 | 727 | Conforming steel |
| A6 | 0.045 | 0.03 | 1.76 | 0.013 | 0.0021 | 0.019 | 0.019 | 0.008 | 0.0030 | 0.03 | 0.05 | 0.30 | 0.30 | 0.002 | 0.0013 | 0.464 | 865 | 723 | Conforming steel |
| A7 | 0.030 | 0.08 | 1.20 | 0.003 | 0.0006 | 0.015 | 0.029 | 0.020 | 0.0060 | 0.18 | 0.30 | 0.45 | 0.45 | 0.002 | 0.0027 | 0.442 | 871 | 742 | Conforming steel |
| A8 | 0.062 | 0.09 | 1.83 | 0.008 | 0.0014 | 0.040 | 0.050 | 0.003 | 0.0049 | 0.10 | 0.10 | 0.17 | 0.39 | 0.090 | 0.0025 | 0.510 | 861 | 703 | Comparative steel |
| A9 | 0.060 | 0.14 | 1.60 | 0.008 | 0.0015 | 0.030 | 0.063 | 0.031 | 0.0050 | 0.03 | 0.05 | 0.30 | 0.30 | 0.002 | 0.0002 | 0.452 | 868 | 732 | Comparative steel |
| A10 | 0.042 | 0.08 | 1.60 | 0.006 | 0.0006 | 0.030 | 0.001 | 0.014 | 0.0055 | 0.13 | 0.13 | 0.21 | 0.27 | 0.002 | 0.0060 | 0.422 | 866 | 734 | Comparative steel |
| A11 | 0.049 | 0.05 | 1.68 | 0.008 | 0.0014 | 0.035 | 0.040 | 0.010 | 0.0044 | 0.25 | 0.44 | 0.01 | 0.45 | 0.000 | 0.0018 | 0.467 | 858 | 695 | Conforming steel |
| A12 | 0.039 | 0.06 | 1.56 | 0.008 | 0.0014 | 0.030 | 0.030 | 0.011 | 0.0045 | 0.05 | 0.06 | 0.28 | 0.28 | 0.001 | 0.0035 | 0.419 | 871 | 742 | Conforming steel |
| A13 | 0.032 | 0.06 | 1.55 | 0.003 | 0.0004 | 0.030 | 0.052 | 0.010 | 0.0045 | 0.05 | 0.06 | 0.40 | 0.40 | 0.001 | 0.0020 | 0.458 | 873 | 734 | Conforming steel |
| A14 | 0.049 | 0.05 | 1.65 | 0.008 | 0.0014 | 0.037 | 0.030 | 0.010 | 0.0040 | 0.28 | 0.18 | 0.21 | 0.27 | 0.003 | 0.0019 | 0.451 | 856 | 723 | Conforming steel |
| A15 | 0.050 | 0.05 | 1.67 | 0.007 | 0.0019 | 0.025 | 0.031 | 0.015 | 0.0055 | 0.00 | 0.00 | 0.15 | 0.45 | 0.000 | 0.0000 | 0.448 | 873 | 723 | Conforming steel |
| A16 | 0.061 | 0.45 | 1.60 | 0.008 | 0.0015 | 0.030 | 0.072 | 0.019 | 0.0050 | 0.03 | 0.05 | 0.30 | 0.30 | 0.000 | 0.0020 | 0.453 | 878 | 731 | Comparative steel |

[Table 2]

| Cladding metal No. | Chemical composition of cladding metal (mass%) | | | | | | | | | | |
|---|---|---|---|---|---|---|---|---|---|---|---|
| | C | Si | Mn | P | S | Cr | Mo | Fe | Al | Ti | Nb + Ta |
| B1 | 0.014 | 0.16 | 0.13 | 0.003 | 0.0008 | 22.1 | 9.2 | 2.9 | 0.20 | 0.22 | 4.09 |
| B2 | 0.009 | 0.16 | 0.14 | 0.004 | 0.0007 | 21.6 | 8.9 | 3.3 | 0.18 | 0.22 | 4.15 |
| B3 | 0.018 | 0.18 | 0.15 | 0.003 | 0.0009 | 22.3 | 8.4 | 3.2 | 0.16 | 0.25 | 3.89 |

[Table 3]

| Cladding metal No. | Chemical composition of cladding metal (mass%) | | | | | | | | | | |
|---|---|---|---|---|---|---|---|---|---|---|---|
| | C | Si | Mn | P | S | Cu | Ni | Cr | Mo | Al | Ti |
| B4 | 0.010 | 0.23 | 0.41 | 0.019 | 0.0003 | 2.17 | 39.5 | 23.4 | 3.14 | 0.13 | 0.73 |
| B5 | 0.014 | 0.25 | 0.39 | 0.018 | 0.0004 | 1.89 | 41.5 | 22.1 | 3.41 | 0.18 | 1.11 |
| B6 | 0.018 | 0.26 | 0.41 | 0.018 | 0.0006 | 2.81 | 44.2 | 20.3 | 2.61 | 0.16 | 0.80 |
| B7 | 0.019 | 0.25 | 0.40 | 0.017 | 0.0007 | 1.55 | 41.1 | 21.5 | 3.20 | 0.17 | 0.77 |

[Table 4]

| Cladding metal No. | Chemical composition of cladding metal (mass%) | | | | | | | |
|---|---|---|---|---|---|---|---|---|
| | C | Si | Mn | P | S | Ni | Cr | Mo |
| B8 | 0.015 | 0.61 | 0.76 | 0.021 | 0.0006 | 12.21 | 17.68 | 2.15 |
| B9 | 0.019 | 0.51 | 0.55 | 0.021 | 0.0007 | 13.45 | 17.85 | 2.89 |
| B10 | 0.015 | 0.56 | 0.64 | 0.018 | 0.0005 | 14.41 | 16.31 | 2.55 |
| B11 | 0.029 | 0.63 | 0.81 | 0.021 | 0.0007 | 12.35 | 17.31 | 2.08 |

[Table 5]

| Manufacturing condition No. | Quenching | | | | Tempering |
|---|---|---|---|---|---|
| | Heating temperature (°C) | Cooling start temperature (°C) | Average cooling rate (°C/s) | Cooling stop temperature (°C) | Tempering temperature (°C) |
| C1 | 930 | 870 | 7 | 200 | 500 |
| C2 | 1000 | 880 | 7 | 200 | 500 |
| C3 | 900 | 810 | 7 | 200 | 400 |
| C4 | 930 | 870 | 5 | 100 | 500 |
| C5 | 930 | 870 | 7 | 450 | 500 |
| C6 | 930 | 870 | 7 | 200 | 650 |
| C7 | 930 | 870 | 7 | 300 | 350 |
| C8 | 840 | 800 | 7 | 200 | 500 |
| C9 | 1030 | 870 | 7 | 200 | 500 |
| C10 | 930 | 700 | 7 | 200 | 500 |
| C11 | 930 | 870 | 2 | 200 | 500 |
| C12 | 930 | 870 | 7 | 550 | 500 |
| C13 | 930 | 870 | 7 | 500 | 200 |
| C14 | 930 | 870 | 5 | 450 | 660 |

The clad steel plates thus obtained were used to perform a tensile test and a DWTT test (test temperature: - 30°C) in accordance with API-5L to determine the tensile strength, yield strength, and percent ductile fracture: DWTTSA-$_{30°C}$. Seam welded joints were produced. A Charpy impact test (test temperature: -40°C) was performed at FL, FL + 2 mm, and FL + 5 mm, at a location 2 mm below the outer surface of a seam weld, in accordance with DNV-OS-F101, to determine the absorbed energy: vE-$_{40°C}$.

The target values of the tensile strength, percent ductile fracture: DWTTSA-$_{30°C}$, and absorbed energy: vE$_{-40°C}$ are described below.

    Tensile strength: 535 MPa or more
    Percent ductile fracture: DWTTSA$_{-30°C}$: 85% or more
    Absorbed energy: vE$_{-40°C}$: 200 J or more

Furthermore, using the methods described above, the steel microstructure was identified, and the average crystal grain size of bainite was calculated.

The results are presented in Table 6.

[Table 6]

| No. | Base steel No. | Cladding metal No. | Manufacturing condition No. | Steel microstructure of base steel plate | | Evaluation results | | | | | | Remarks |
|---|---|---|---|---|---|---|---|---|---|---|---|---|
| | | | | Area fraction of bainite at 1/2 plate thickness position (%) | Average crystal grain size of bainite (μm) | YS (MPa) | TS (MPa) | DWTT SA$_{-30°C}$ (%) | FL vE$_{-40°C}$ (J) | FL + 2 mm vE$_{-40°C}$ (J) | FL + 5 mm vE$_{-40°C}$ (J) | |
| 1 | A1 | B1 | C1 | 90 | 19 | 415 | 481 | 100 | 203 | 301 | 303 | Comparative Example |
| 2 | A2 | B1 | C1 | 87 | 14 | 461 | 549 | 97 | 205 | 295 | 298 | Example |
| 3 | A3 | B1 | C1 | 88 | 14 | 459 | 540 | 100 | 208 | 310 | 307 | Example |
| 4 | A4 | B1 | C1 | 87 | 13 | 552 | 650 | 100 | 201 | 301 | 300 | Example |
| 5 | A5 | B1 | C1 | 87 | 13 | 470 | 555 | 100 | 207 | 309 | 307 | Example |
| 6 | A6 | B1 | C1 | 87 | 14 | 521 | 615 | 100 | 210 | 312 | 309 | Example |
| 7 | A7 | B1 | C1 | 90 | 13 | 455 | 542 | 100 | 209 | 308 | 310 | Example |
| 8 | A8 | B1 | C1 | 80 | 13 | 621 | 729 | 87 | 160 | 248 | 252 | Comparative Example |
| 9 | A9 | B1 | C1 | 79 | 14 | 476 | 560 | 57 | 142 | 200 | 198 | Comparative Example |
| 10 | A10 | B1 | C1 | 85 | 21 | 452 | 542 | 25 | 166 | 232 | 231 | Comparative Example |
| 11 | A11 | B1 | C1 | 86 | 13 | 520 | 624 | 100 | 202 | 302 | 304 | Example |
| 12 | A12 | B1 | C1 | 87 | 14 | 453 | 540 | 100 | 204 | 308 | 294 | Example |
| 13 | A13 | B1 | C1 | 87 | 14 | 480 | 573 | 100 | 205 | 308 | 297 | Example |
| 14 | A14 | B1 | C1 | 87 | 13 | 498 | 589 | 100 | 205 | 295 | 298 | Example |
| 15 | A14 | B2 | C2 | 85 | 19 | 523 | 620 | 85 | 215 | 312 | 307 | Example |
| 16 | A14 | B3 | C3 | 86 | 12 | 488 | 574 | 100 | 204 | 314 | 287 | Example |
| 17 | A14 | B4 | C4 | 87 | 16 | 477 | 573 | 97 | 218 | 301 | 297 | Example |
| 18 | A14 | B5 | C5 | 86 | 13 | 502 | 580 | 91 | 206 | 309 | 316 | Example |
| 19 | A14 | B6 | C6 | 85 | 13 | 488 | 556 | 88 | 219 | 295 | 300 | Example |
| 20 | A14 | B7 | C7 | 86 | 13 | 488 | 609 | 99 | 209 | 283 | 309 | Example |

EP 4 707 421 A1

(continued)

| No. | Base steel No. | Cladding metal No. | Manufacturing condition No. | Steel microstructure of base steel plate | | Evaluation results | | | | | | Remarks |
|---|---|---|---|---|---|---|---|---|---|---|---|---|
| | | | | Area fraction of bainite at 1/2 plate thickness position (%) | Average crystal grain size of bainite ($\mu$m) | YS (MPa) | TS (MPa) | DWTT SA$_{-30°C}$ (%) | FL vE$_{-40°C}$ (J) | FL + 2 mm vE$_{-40°C}$ (J) | FL + 5 mm vE$_{-40°C}$ (J) | |
| 21 | A14 | B8 | C8 | 75 | 18 | 468 | 544 | 17 | 206 | 299 | 301 | Comparative Example |
| 22 | A14 | B9 | C9 | 86 | 21 | 518 | 622 | 55 | 207 | 296 | 308 | Comparative Example |
| 23 | A3 | B10 | C10 | 40 | 18 | 398 | 520 | 85 | 209 | 297 | 304 | Comparative Example |
| 24 | A14 | B11 | C11 | 86 | 21 | 438 | 544 | 53 | 210 | 291 | 299 | Comparative Example |
| 25 | A14 | B1 | C12 | 79 | 14 | 482 | 559 | 68 | 202 | 300 | 297 | Comparative Example |
| 26 | A14 | B1 | C13 | 79 | 13 | 493 | 629 | 71 | 210 | 308 | 294 | Comparative Example |
| 27 | A14 | B1 | C14 | 79 | 16 | 467 | 541 | 62 | 205 | 306 | 303 | Comparative Example |
| 28 | A15 | B1 | C1 | 86 | 13 | 485 | 585 | 100 | 201 | 290 | 288 | Example |
| 29 | A16 | B1 | C1 | 80 | 13 | 496 | 590 | 87 | 71 | 198 | 298 | Comparative Example |
| 30 | A16 | B4 | C1 | 80 | 13 | 495 | 588 | 85 | 75 | 193 | 290 | Comparative Example |
| 31 | A16 | B8 | C1 | 80 | 13 | 498 | 592 | 87 | 50 | 182 | 297 | Comparative Example |

EP 4 707 421 A1

It can be seen from Table 6 that in each of the examples, the tensile strength: 535 MPa or more and the percent ductile fracture: DWTTSA$_{-30°C}$: 85% or higher are obtained, which indicates excellent low-temperature toughness. Furthermore, the absorbed energy: vE$_{-40°C}$: 200 J or more is obtained, which indicates good HAZ toughness.

In Table 6, No. 1, which is a comparative example, the C content, the Mn content, and Ceq of the base steel plate are lower than the appropriate ranges; thus, the desired tensile strength is not obtained.

No. 8 is a comparative example. In No. 8, the C content and the Mn content of the base steel plate are more than the appropriate ranges. The Ti content is lower than the appropriate range, and the pinning effect on austenite due to nitride formation is insufficient. Thus, the desired HAZ toughness is not obtained.

No. 9 is a comparative example. In No. 9, the Nb content and the Ti content of the base steel plate are more than the appropriate ranges, which may lead coarsening of (Ti, Nb) (C, N) and the formation of a martensite-austenite constituent. Furthermore, the Si content is more than the appropriate range, which may promote the formation of the martensite-austenite constituent. Therefore, the desired low-temperature toughness and HAZ toughness are not obtained.

No. 10 is a comparative example. In No. 10, the Nb content of the base steel plate is lower than the appropriate range. Thus, the effect of inhibiting the coarsening of austenite by the formation of carbonitrides is insufficient. In addition, the Ca content is more than the appropriate range, Ca-based oxides may increase. Therefore, the desired low-temperature toughness and HAZ toughness are not obtained.

No. 21 is a comparative example. In No. 21, the heating temperature of the quenching treatment is lower than the appropriate range. Thus, austenite transformation is not completed in the base steel plate, resulting in an inhomogeneous final microstructure. Therefore, the desired low-temperature toughness is not obtained.

No. 22 is a comparative example. In No. 22, the heating temperature of the quenching treatment is higher than the appropriate range, and Nb carbonitrides in the base steel plate dissolve. Since Nb carbonitrides act on the pinning of austenite, the dissolution of Nb carbonitrides causes the austenite coarsen, and the desired low-temperature toughness is not obtained.

No. 23 is a comparative example. In No. 23, the cooling start temperature of the quenching treatment is lower than the appropriate range, which lead the formation of ferrite in the base steel plate prior to bainite transformation, and the desired tensile strength is not obtained.

No. 24 is a comparative example. In No. 24, the average cooling rate in the quenching treatment is less than the appropriate range, which result in coarsening the crystal grains of the transformed microstructure of the base steel plate, and the desired low-temperature toughness is not obtained.

No. 25 is a comparative example. In No. 25, the cooling stop temperature in the quenching treatment is higher than the appropriate range, which result in forming coarse cementite and a martensite-austenite constituent in the base steel plate, and the desired low-temperature toughness is not obtained.

No. 26 is a comparative example. In No. 26, the tempering temperature is lower than the appropriate range, which leads the decomposition of a martensite-austenite constituent and recovery of dislocations in the base steel plate are insufficient, and the desired low-temperature toughness is not obtained.

No. 27 is a comparative example. In No. 27, the tempering temperature is higher than the appropriate range, which leads coarsening the precipitates such as cementite in the base steel plate, and the desired low-temperature toughness is not obtained.

Each of Nos. 29, 30, and 31 is comparative example. In each of Nos. 29, 30, and 31, the C content and the Nb content of the base steel plate are more than the appropriate ranges, which leads to the formation of a martensite-austenite constituent and coarse Nb carbonitrides. Furthermore, the Si content is more than the appropriate range, which promotes the formation of the martensite-austenite constituent. Therefore, the desired HAZ toughness is not obtained.

**Claims**

1. A clad steel plate, comprising a cladding metal bonded to one surface or both surfaces of a base steel plate,

   wherein the base steel plate has a chemical composition containing, in mass%:

   C: 0.030% or more and 0.060% or less,
   Si: less than 0.10%,
   Mn: 1.00% or more and 1.80% or less,
   P: 0.015% or less,
   S: 0.003% or less,
   Al: 0.010% or more and 0.070% or less,
   Nb: 0.005% or more and 0.060% or less,

Ti: 0.005% or more and 0.030% or less, and
N: 0.0010% or more and 0.0060% or less,

further containing:
one or two or more selected from:

Cu: 0.01% or more and 0.50% or less,
Ni: 0.01% or more and 0.50% or less,
Cr: 0.01% or more and 0.50% or less,
Mo: 0.01% or more and 0.50% or less,
V: 0.001% or more and 0.100% or less, and
Ca: 0.0005% or more and 0.0040% or less, and
satisfying a relationship represented by the following formula (1),
the balance being Fe and unavoidable impurities, and
wherein the base steel plate has a steel microstructure in which
at a 1/2 plate thickness position in a thickness direction of the base steel plate, an area fraction of bainite is 80% or more, and an average crystal grain size of bainite is less than 20 $\mu$m,

$$0.40 \leq Ceq \leq 0.50 \cdots (1)$$

where Ceq is defined by the following formula:

Ceq = [C] + [Mn]/6 + ([Cu] + [Ni])/15 + ([Cr] + [Mo] + [V]) /5

where [C], [Mn], [Cu], [Ni], [Cr], [Mo], and [V] are amounts (mass%) of C, Mn, Cu, Ni, Cr, Mo, and V, respectively, contained in the base steel plate.

2. The clad steel plate according to claim 1, wherein the cladding metal is a Ni-based alloy or an austenitic stainless steel.

3. A method for manufacturing a clad steel plate, comprising: a hot rolling step of subjecting a slab including at least one stacked set of a material having the chemical composition of the base steel plate according to claim 1 and a material for a cladding metal to hot rolling to obtain a rolled plate including the base steel plate and the cladding metal;

   a quenching treatment step of subjecting the rolled plate to heating to a heating temperature: an $Ac_3$ temperature or higher and 1,000°C or lower as measured at a 1/2 plate thickness position in a thickness direction of the base steel plate, and after the heating, subjecting the rolled plate to cooling at a cooling start temperature: an $Ar_3$ temperature or higher, in terms of a surface temperature, at an average cooling rate: 5 °C/s or greater, and at a cooling stop temperature: 500°C or lower as measured at the 1/2 plate thickness position in the thickness direction of the base steel plate; and
   a tempering treatment step of subjecting the rolled plate to tempering in a temperature range of 350°C or higher and 650°C or lower as measured at the 1/2 plate thickness position in the thickness direction of the base steel plate.

4. The method for manufacturing a clad steel plate according to claim 3, wherein the slab is a stack of a material for the base steel plate, a material for the cladding metal, a material for the cladding metal, and a material for the base steel plate, in this order.

5. A line pipe using the clad steel plate according to claim 1 or 2.

## INTERNATIONAL SEARCH REPORT

| International application No. |
|---|
| **PCT/JP2024/014694** |

**A. CLASSIFICATION OF SUBJECT MATTER**

*C22C 38/00*(2006.01)i; *C21D 8/02*(2006.01)i; *C21D 9/00*(2006.01)i; *C22C 19/05*(2006.01)i; *C22C 30/00*(2006.01)i; *C22C 38/58*(2006.01)i; *C22F 1/00*(2006.01)i; *C22F 1/10*(2006.01)i

FI:   C22C38/00 301B; C22C38/58; C22C19/05 E; C22C38/00 302Z; C22C30/00; C21D9/00 Z; C21D8/02 D; C21D8/02 B; C22C19/05 B; C22F1/10 H; C22C38/00 301Z; C22F1/00 682; C22F1/00 683; C22F1/00 691B; C22F1/00 691C; C22F1/00 692A; C22F1/00 692B; C22F1/00 694A; C22F1/00 694B; C22F1/00 640A; C22F1/00 641B; C22F1/00 650B; C22F1/00 630A; C22F1/00 630M; C22F1/00 623; C22F1/00 627; C22F1/00 640Z; C22F1/00 626; C22F1/00 684C

According to International Patent Classification (IPC) or to both national classification and IPC

**B. FIELDS SEARCHED**

Minimum documentation searched (classification system followed by classification symbols)

C22C38/00-38/60; C21D8/02; C21D9/00; C22C19/05; C22C30/00; C22F1/00; C22F1/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/004410 A1 (JFE STEEL CORPORATION) 02 January 2020 (2020-01-02) entire text | 1-5 |
| A | WO 2021/054335 A1 (JFE STEEL CORPORATION) 25 March 2021 (2021-03-25) entire text | 1-5 |
| A | WO 2016/157863 A1 (JFE STEEL CORPORATION) 06 October 2016 (2016-10-06) entire text | 1-5 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 June 2024** | **02 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
**Information on patent family members**

International application No.

**PCT/JP2024/014694**

| Patent document cited in search report | | | Publication date (day/month/year) | Patent family member(s) | | | Publication date (day/month/year) |
|---|---|---|---|---|---|---|---|
| WO | 2020/004410 | A1 | 02 January 2020 | US | 2021/0260689 | A1 | |
| | | | | entire text | | | |
| | | | | EP | 3816318 | A1 | |
| | | | | KR | 10-2021-0010566 | A | |
| | | | | CN | 112334589 | A | |
| WO | 2021/054335 | A1 | 25 March 2021 | EP | 4032998 | A1 | |
| | | | | entire text | | | |
| | | | | CN | 114402088 | A | |
| WO | 2016/157863 | A1 | 06 October 2016 | US | 2018/0057908 | A1 | |
| | | | | entire text | | | |
| | | | | EP | 3279352 | A1 | |
| | | | | KR | 10-2017-0118939 | A | |
| | | | | CN | 107532253 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015086422 A
- JP 2015117408 A
- JP 2015105399 A
- WO 2018181381 A